# EUROPÄISCHE PATENTANMELDUNG

(11) **EP 2 058 482 A1**
(43) Veröffentlichungstag der Anmeldung: **13.05.2009**
(21) Anmeldenummer: 08022397.7
(22) Anmeldetag: 23.02.2006
(51) Int. Cl.: F01N 3/28, B01J 35/04, F01N 3/022

(54) **Wabenkörper mit zerklüfteten Stirnseiten**

(30) Priorität: 28.02.2005 DE 102005009585
(62) Teilanmeldung aus: 06707217.3
(71) Anmelder: Emitec Gesellschaft für Emissionstechnologie mbH, 53797 Lohmar (DE)
(72) Erfinder: Kramer, Jan, Macomb, MI 48044 (US); Kurth, Ferdi, 53894 Mechernich (DE); Schmidt, Udo, 53819 Neunkirchen (DE); Faust, Hans-Günter, 51143 Köln (DE); Wieres, Ludwig, 51491 Overath (DE)
(74) Vertreter: Rössler, Matthias

(57) **Zusammenfassung**

Die vorliegende Erfindung betrifft einen aus Blechen (2, 3) gewickelten, geschlungenen und/oder geschichteten Wabenkörper (1) mit einer Vielzahl von zumindest teilweise strukturierten Blechlagen (2), deren Strukturierung Kanäle (4) bildet, die von einer Eintrittsstirnseite (5) zu einer Austrittsstirnseite (6) des Wabenkörpers (1) führen. Erfindungsgemäß weist zumindest ein Teil der Blechlagen (2, 3) an der Eintrittsstirnseite (5) und/oder der Austrittsstirnseite (6) an ihren Rändern (7, 8) Aussparungen (9, 10) auf, so dass sich eine zerklüftete Struktur der Eintrittsstirnseite (5) bzw. Austrittsstirnseite (6) ergibt. Dabei können nur die glatten Bleche (3) oder nur die strukturierten Bleche (2) oder beide Aussparungen (9 bzw. 10) aufweisen. Auch kann mindestens ein Teil der Bleche (2, 3) aus porösem Material bestehen, insbesondere aus verdichteten Metallfasern (16). Durch die Aussparungen (9, 10) wird ein Absetzen von Rußpartikeln (17) an den Stirnseiten (5, 6) des Wabenkörpers (1) weitgehend verhindert.

## Beschreibung

Die vorliegende Erfindung betrifft einen metallischen Wabenkörper, insbesondere für die Reinigung von Abgas eines Verbrennungsmotors. Besonderes Anwendungsgebiet ist die Reinigung eines Abgases von Partikeln.

Man unterscheidet vor allem zwei typische Bauformen für metallische Wabenkörper. Eine frühe Bauform, für die die DE 29 02 779 A1 typische Beispiele zeigt, ist die spiralige Bauform, bei der im Wesentlichen ein glattes und ein gewelltes Blech aufeinander gelegt und spiralförmig aufgewickelt werden. Bei einer anderen Bauform wird der Wabenkörper aus einer Vielzahl von abwechselnd angeordneten glatten und gewellten oder unterschiedlich gewellten Blechen aufgebaut, wobei die Bleche zunächst einen oder mehrere Stapel bilden, die miteinander verschlungen werden. Dabei kommen die Enden aller Bleche außen zu liegen und können mit einem Gehäuse oder Mantelrohr verbunden werden, wodurch zahlreiche Verbindungen entstehen, die die Haltbarkeit des Wabenkörpers erhöhen. Typische Beispiele dieser Bauformen sind in der EP 0 245 737 B1 oder der WO 90/03220 beschrieben. Auch seit langem bekannt ist es, die Bleche mit zusätzlichen Strukturen auszustatten, um die Strömung zu beeinflussen und/oder eine Quervermischung zwischen den einzelnen Strömungskanälen zu erreichen. Typische Beispiele für solche Ausgestaltungen sind die WO 91/01178, die WO 91/01807 und die WO 90/08249. Schließlich gibt es auch Wabenkörper in konischer Bauform, gegebenenfalls auch mit weiteren zusätzlichen Strukturen zur Strömungsbeeinflussung. Ein solcher Wabenkörper ist beispielsweise in der WO 97/49905 beschrieben. Darüber hinaus ist es auch bekannt, in einem Wabenkörper eine Aussparung für einen Sensor freizulassen, insbesondere zur Unterbringung einer Lambdasonde. Ein Beispiel dafür ist in der DE 88 16 154 U1 beschrieben.

Alle solchen Wabenkörper weisen eine Vielzahl von zumindest teilweise strukturierten Blechlagen auf, deren Strukturierung Kanäle bildet, die von einer Eintrittsfläche zu einer Austrittsfläche des Wabenkörpers führen. Mit Blechlagen sind die aufeinander folgenden Schichten des Wabenkörpers gemeint, unabhängig davon, ob diese Blechlagen aus einem oder mehreren getrennten Blechen bestehen. Es sei darauf hingewiesen, dass es grundsätzlich möglich ist, einen Wabenkörper aus nur einem einzigen Blech aufzubauen, indem z. B. ein Teil des Blechstreifens gewellt und der verbleibende glatte Teil des Blechstreifens durch Knicken auf diesen gefaltet wird. Das so entstehende Gebilde kann von der Knicklinie aus spiralig zu einem Wabenkörper aufgewickelt werden. Die nächste Möglichkeit ist, ein glattes und ein gewelltes Blech zur Herstellung eines spiralförmig gewickelten Wabenkörpers zu verwenden. Auch mehrgängige Spiralen aus drei oder mehr Blechen sind möglich. Schließlich gibt es eine große Zahl von Bauformen, die aus einem oder mehreren Stapeln von abwechselnden glatten und gewellten Blechen hergesellt werden. Solche Wabenkörper enthalten eine Vielzahl von Blechen, wobei aber die Zahl der Bleche und die Zahl der aufeinander liegenden Blechlagen auch nicht notwendigerweise gleich sein müssen. Aus diesem Grunde ist prinzipiell zwischen einem Blech und einer Blechlage zu unterscheiden, auch wenn dies beispielsweise in Zeichnungen, die nur einen Ausschnitt eines Wabenkörpers zeigen, oft nicht möglich ist.

Untersuchungen haben gezeigt, dass Wabenkörper in einem Abgasstrom, der Rußpartikel enthält, sich stirnseitig ganz oder teilweise durch abgelagerte Rußpartikel zusetzen können. Dies beeinträchtigt die reguläre Funktion, insbesondere als Rußfilter, und/oder erschwert das Regenerieren. Aufgabe der vorliegenden Erfindung ist es daher, einen Wabenkörper zu schaffen, bei dem eine verringerte Wahrscheinlichkeit für die Ablagerung von Rußpartikeln an den Stirnseiten besteht.

Zur Lösung dieser Aufgabe dient ein Wabenkörper nach dem Anspruch 1. Vorteilhafte Weiterbildungen und Ausführungsbeispiele sind in den abhängigen Ansprüchen beschrieben.

Ein Grund für die Ablagerung von Rußpartikeln an der Stirnseite eines Wabenkörpers ist darin zu sehen, dass die Stirnflächen der Wabenkörperstruktur senkrecht zur Strömungsrichtung liegen. Rußpartikel prallen also fast genau senkrecht auf die Stirnflächen des Wabenkörpers. Durch die Schaffung einer zerklüfteten Struktur an der Eintrittsstirnseite wird gleichzeitig zweierlei erreicht. Einerseits liegen schon rein geometrisch nunmehr erhebliche Teile der Stirnfläche des Wabenkörpers nicht mehr genau senkrecht zur Strömungsrichtung, andererseits wird auch der Verlauf der Strömung beim Eintritt in die einzelnen Kanäle so beeinflusst, dass nur noch wenige Partikel frontal auf die Stirnfläche auftreffen können. Hinzu kommt, dass eventuell entstehende Rußablagerungen sich schon teilweise im Inneren der Kanäle befinden, so dass leichter eine katalytische Reaktion durch Kontakt mit katalytisch beschichteten Kanalwänden in Gang gesetzt werden kann. Eventuell entstehende Ablagerungen können daher leichter wieder beseitigt werden.

Grundsätzlich kann man eine zerklüftete Struktur an den Stirnseiten eines Wabenkörpers durch sehr unterschiedliche Maßnahmen erzielen. Eine Möglichkeit ist die Verwendung unterschiedlich breiter Blechlagen in einem Wabenkörper, was jedoch fertigungstechnisch und bezüglich der Reproduzierbarkeit zu Schwierigkeiten führen kann. Vorteilhafter ist es, wenn gleich breite Blechlagen verwendet werden können. Um trotzdem eine zerklüftete Stirnseite zu erzeugen, muss zumindest ein Teil der Blechlagen mit stirnseitigen Aussparungen versehen werden, wobei Größe und Form der Aussparungen in weiten Grenzen variierbar sind. Grundsätzlich muss für die Lösung der gestellten Aufgabe nur die eintrittseitige Stirnseite eines Wabenkörpers zerklüftet sein, jedoch ist es oft unerwünscht, dass ein Wabenkörper bei seinem Einbau eine bestimmte Orientierung aufweisen muss. Aus diesem Grunde kann es vorteilhaft sein, einen Wabenkörper symmetrisch zu gestalten, damit er in beliebiger Einbaurichtung verwendet werden kann.

Ein erfindungsgemäßer Wabenkörper ist daher aus Blechen gewickelt, geschlungen und/oder geschichtet mit einer Vielzahl von zumindest teilweise strukturierten Blechlagen, deren Strukturierung Kanäle bildet, die von einer Eintrittsstirnseite zu einer Austrittsstirnseite des Wabenkörpers führen. Erfindungsgemäß weist zumindest ein Teil der Blechlagen an der Eintrittsstirnseite und/oder der Austrittsstirnseite an ihren Rändern Aussparungen auf, so dass sich eine zerklüftete Struktur der Eintrittsstirnseite bzw. Austrittsstirnseite ergibt.

Typischerweise sind Wabenkörper aus abwechselnden Lagen im wesentlichen glatter und gewellter Bleche aufgebaut, wobei es erfindungsgemäß möglich ist, dass nur die glatten Bleche, nur die gewellten Bleche oder auch beide Aussparungen aufweisen.

Bei Wabenkörpern, die als Partikelfilter, insbesondere zum Beseitigen von Rußpartikeln, ausgebildet sind, besteht oft ein Teil der Blechlagen aus porösem Material, insbesondere aus verdichteten Metallfasern. Im Sinne der vorliegenden Erfindung können Bleche daher auch aus porösem Material, insbesondere Fasermaterial bestehen. Die Erfindung ist auf praktisch alle bekannten metallischen Wabenkörper, die aus einem oder mehreren Blechen aufgebaut sind, anwendbar, unabhängig davon, welche zusätzlichen Öffnungen, Strukturen oder sonstigen Besonderheiten solche Wabenkörper aufweisen.

Aus Gründen der höheren mechanischen Festigkeit werden allerdings metallische Wabenkörper, die aus Blechlagen aufgebaut sind, oft an ihren Stirnseiten verlötet, d. h. die metallischen Blechlagen werden stirnseitig an ihren Berührungsstellen miteinander verlötet. Bei einer stark zerklüfteten Struktur der Stirnseiten ergibt sich hier natürlich das Problem, dass herkömmliche Verfahren zur Verlötung der Blechlagen untereinander nicht ohne weiteres angewendet werden können. Aus diesem Grunde ist es vorteilhaft, wie in einer Ausgestaltung der Erfindung angegeben, die Bleche an ihren Stirnseiten nicht überall mit Aussparungen zu versehen, sondern an ihren stirnseitigen Rändern Abschnitte ohne Aussparungen vorzusehen, die lang genug und häufig genug sind, dass sich statistisch verteilt immer noch eine Vielzahl von Kontaktstellen zwischen den vordersten bzw. hintersten Rändern der Blechlagen ergibt. Um haltbare Wabenkörper herzustellen, ist es nicht unbedingt erforderlich, jede einzelne Kontaktstelle zwischen den Blechlagen stirnseitig zu verlöten. Durch geeignete Gestaltung der stirnseitigen Ränder der Blechlagen können beispielsweise 5 %, vorzugsweise mehr als 10 %, der durch die strukturierten Blechlagen theoretisch möglichen Kontaktstellen zwischen den Blechlagen mit herkömmlichen Verfahren belotet und verlötet werden, da sich diese Kontaktstellen nicht von denen bei Wabenkörpern mit glatten Stirnseiten unterscheiden.

Bevorzugt wird die Verbindung auf Wabenkörper angewendet, die aus einem oder mehreren Stapeln von Blechen gebildet sind, wobei die Bleche jedes Stapels eine vorgegebene Länge und eine vorgegebene Breite aufweisen, wobei die Länge größer als die Breite ist, und wobei die Bleche jedes Stapels jeweils viele Aussparungen über die Länge aufweisen. Die Aussparungen befinden sich also an den Längsseiten der Bleche, während die Breitseiten bevorzugt, aber nicht notwendigerweise, ohne Aussparungen ausgebildet sind. Da die Breitseiten typischerweise bei der Fertigstellung eines Wabenkörpers mit dessen Mantelrohr verbunden werden müssen, sind hier Aussparungen nicht unbedingt von Vorteil.

Gemäß einer bevorzugten Ausführungsform der Erfindung weisen die Aussparungen gerundete Berandungslinien auf, wodurch Kerbeffekte, also das Einreißen der Blechränder im Bereich der Aussparungen, weitgehend vermieden werden.

Besonders bevorzugt werden Aussparungen in Form von Kreisabschnitten, vorzugsweise jeweils ein Halbkreis oder kleinerer Kreisabschnitt. Da Partikelfilter z. B. auch aus gelochten Blechlagen hergestellt werden, können gegebenenfalls sogar die Maschinen, mit denen ohnehin Löcher in den Blechlagen erzeugt werden, auch zur Erzeugung der Aussparungen an den Rändern der Blechlagen eingesetzt werden. Man kann sogar breite Blechbänder gleichmäßig mit Löchern versehen und danach die Blechstreifen auf die gewünschte Breite schneiten, wobei vorzugsweise die Schnittlinien durch die Mitte von Lochreihen verlaufen sollten.

Um den gewünschten Effekt der Vermeidung von Rußablagerungen an den Stirnseiten zu erreichen, ist es von Vorteil, wenn mehr als 80 % der Kanäle an mindestens einer Stirnseite eines erfindungsgemäßen Wabenkörpers im Bereich mindestens einer Aussparung enden. Besonders bevorzugt sollten es sogar mehr als 90 % der Kanäle sein. Auf diese Weise kann sichergestellt werden, dass auch lokale Anhäufungen von Ruß an der Stirnseite vermieden werden.

Weiterhin wird ein Wabenkörper vorgeschlagen, der an der Eintrittsstirnseite wenigstens einen Hohlraum aufweist. Dieser Hohlraum ist bevorzugt zentrisch angeordnet und weist insbesondere einen sich konusförmig verjüngenden Abschnitt auf. Ein Vorteil einer solchen Ausgestaltung ist, dass damit unterschiedlich lange Kanäle gebildet sind, die Druckdifferenzen hinsichtlich benachbarter Kanäle zur Folge haben. Damit wird eine Vermischung von Teilabgasströmen innerhalb des Wabenkörpers gefördert.

Bevorzugt auch eine Ausgestaltung des Wabenkörpers, bei dem ein Teil der Kanäle nahe der Austrittsstirnseite verschlossen ist. Ein solcher Verschluss der Kanäle kann durch Zusammenpressen der Kanalwände und/oder durch die Bereitstellung einer Blockade erfolgen. Besonders bevorzugt werden zumindest ein Teil der am äußeren Rand des Wabenkörpers angeordneten Kanäle verschlossen, so dass eine erzwungene Strömung innerhalb des Wabenkörpers durch die Aussparungen hindurch in innen liegende Teilvolumen eintritt.

Gemäß einer anderen Weiterbildung des Wabenkörpers hat dieser mehrere Teilvolumen, die eine voneinander verschiedene Anzahl von Kanälen pro Einheitsquerschnittsfläche aufweisen. Bevorzugt ist dabei eine (z.B. für zylindrische Ausgestaltungen des Wabenkörpers) koaxiale Anordnung von zwei Teilvolumen.

Das Einsatzgebiet erfindungsgemäßer Wabenkörpers ist hauptsächlich die Reinigung des Abgases von Verbrennungsmotoren, insbesondere von Dieselmotoren,
wobei hier insbesondere die Beseitigung von Rußpartikeln aus dem Abgas im Vordergrund steht.

Weitere Einzelheiten und Ausführungsbeispiele der Erfindung werden im Folgenden anhand der Zeichnung näher erläutert, und zwar zeigen
- Fig. 1: eine schematische Ansicht eines erfindungsgemäßen Wabenkörpers während des Herstellungsprozesses,
- Fig. 2: die Ansicht eines strukturierten Bleches mit erfindungsgemäßen Aussparungen,
- Fig. 3: eine perspektivische schematische Ansicht eines kleinen stirnseitigen Ausschnittes eines erfindungsgemäßen Wabenkörpers,
- Fig. 4: verschiedene Möglichkeiten der Ausgestaltung der Ränder eines Bleches,
- Fig. 5: schematisch den Einsatz eines erfindungsgemäßen Wabenkörpers im Abgassystem eines Verbrennungsmotors,
- Fig. 6: eine weitere Ausführongsvariante eines erfindungsgemäßen Wabenkörpers, und
- Fig. 7: noch eine andere Ausführungsvariante eines erfindungsgemäßen Wabenkörpers.

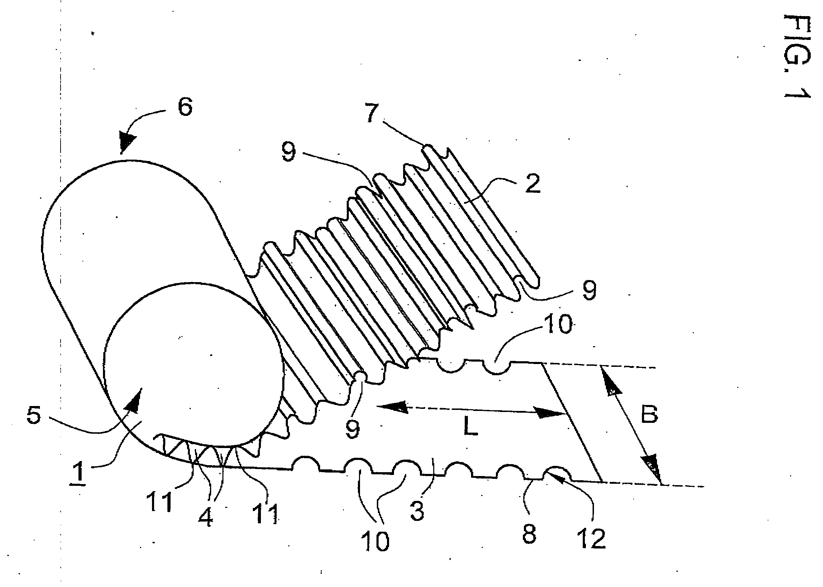

Fig. 1 zeigt einen Wabenkörper 1 schematisch während des Fertigungsprozesses. Der Wabenkörper 1 wird aus einem strukturierten Blech 2 und einem glatten Blech 3 aufgebaut, wobei das strukturierte Blech 2 Aussparungen 9 an beiden längsseitigen Rändern aufweist. Auch das glatte Blech 3 mit der Breite B und der Länge L hat an seinen stirnseitigen Rändern 8 über die Länge L viele Aussparungen 10. Die Berandungslinien 12 dieser Aussparungen 10 sind gerundet, so dass die Aussparungen 10 etwa die Form von Kreissegmente aufweisen. Beim weiteren Aufwickeln der Bleche 2, 3 bilden sich die Kanäle 4 des Wabenkörpers 1, wobei trotz der Aussparungen 9, 10 noch genügend stirnseitige Verbindungsstellen 11 zwischen den glatten und gewellten Blechlagen 2, 3 entstehen. Der fertige Wabenkörper weist später eine zerklüftete Eintrittsstirnseite 5 und eine zerklüftete Austrittsstirnseite 6 auf, jedoch lassen sich bei Bedarf trotzdem noch genügend Verbindungsstellen 11 durch herkömmliche Verfahren miteinander verlöten.

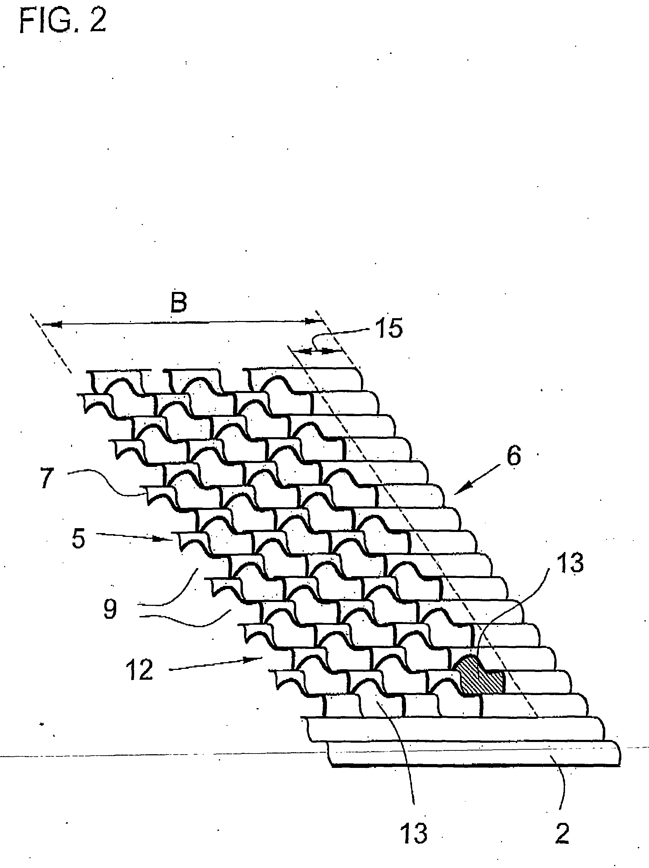

Fig. 2 zeigt ein zum Aufbau eines erfindungsgemäßen Wabenkörpers geeignetes gewelltes Blech 2 mit der Breite B. In diesem Ausführungsbeispiel weist nur die Eintrittsstirnseite 5 Aussparungen 9 auf, während die Austrittsstirnseite 6 einen Randstreifen 15 ohne Aussparungen aufweist. Der stirnseitige Rand 7 des gewellten Bleches 2 weist Aussparungen 9 mit kreisabschnittförmigen Berandungslinien 12 auf. Auch weiter im Inneren des strukturierten Bleches 2 sind Öffnungen 13 vorhanden. Für die vorliegende Erfindung kommt es auf die genaue Form der Öffnungen 13 und Aussparungen 9 nicht an, jedoch kann es vorteilhaft sein, die Formen so zu wählen, dass die Projektion dieser Öffnungen bzw. Aussparungen auf die Mittelebene des strukturierten Bleches 2 kreisförmig bzw. kreisabschnittsförmig ist.

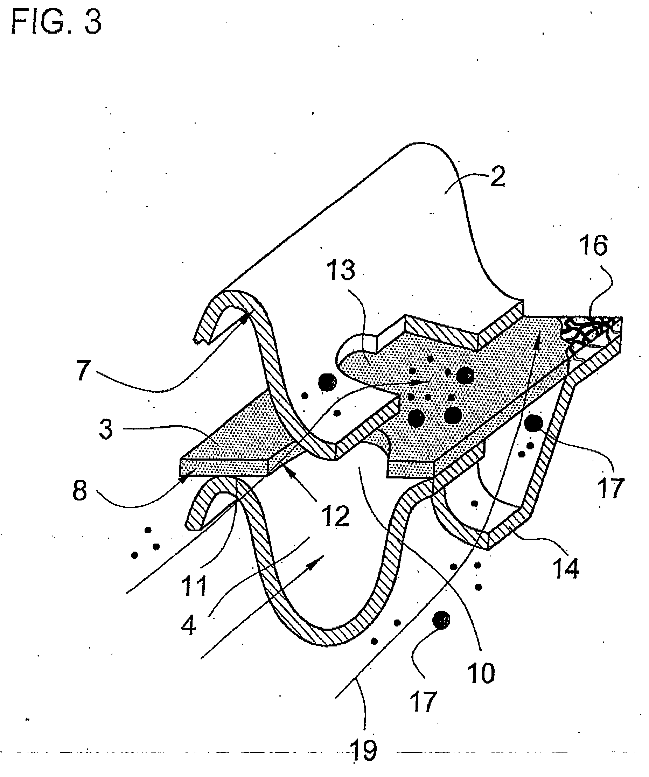

Fig. 3 zeigt in schematischer perspektivischer Darstellung die typischen Verhältnisse in einem Partikelfilter, in dem das Abgas durch Umlenkungsstrukturen 14 durch eine poröse glatte Lage 3 aus Metallfasern 16 gelenkt wird. Die Strömungswege 19 sind durch Pfeile angedeutet. Durch Öffnungen 13 und die Umlenkstrukturen 14 werden Rußpartikel 17 auf die poröse Blechlage 3 gelenkt, dort festgehalten und umgesetzt. Auch bei diesem Ausführungsbeispiel kann das Anlagern von Rußpartikeln 17 an dem stirnseitigen Blechrand 7 des strukturierten Bleches 2 oder dem stirnseitigen Blechrand 8 des glatten Bleches 3 durch Aussparungen 10 in dem glatten Blech 3 vermindert werden. Auch hier weist die Berandungslinie 12 der Aussparung 10 etwa die Form eines Kreisabschnittes auf Man erkennt, dass die Aussparung 10 die Strömungsverhältnisse beim Eintritt der Strömung in die angrenzenden Kanäle 4 beeinflusst und eine Anlagerung von Partikeln dadurch weniger wahrscheinlich wird.

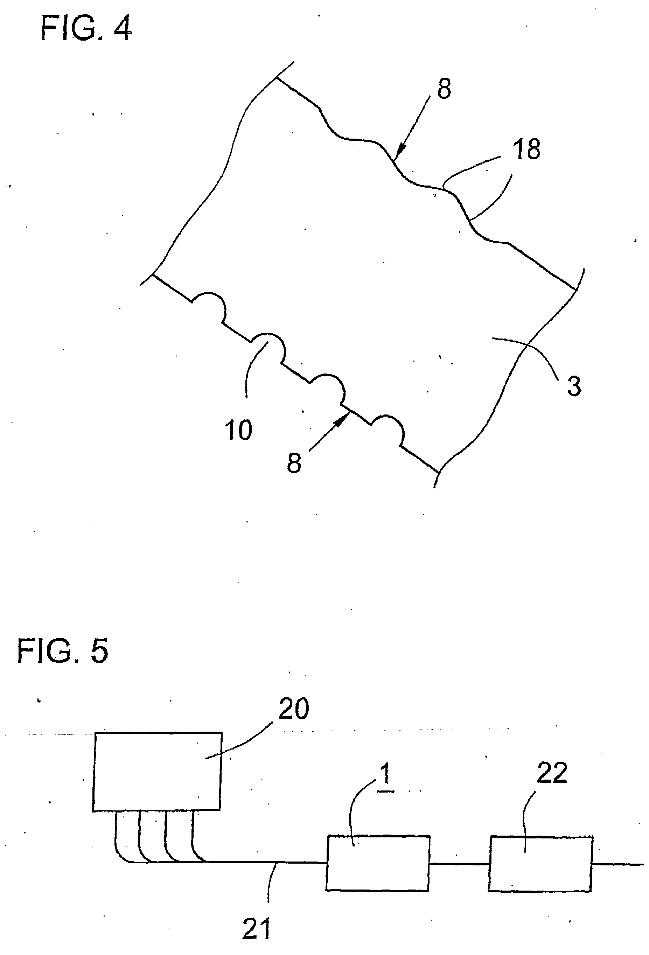

Fig. 4 zeigt schematisch verschiedene Möglichkeiten der Gestaltung der Ränder eines Bleches mit Aussparungen. Im vorliegenden Ausführungsbeispiel ist ein stirnseitiger Blechrand 8 des glatten Bleches 3 mit einzelnen Aussparungen 10 versehen, während der gegenüberliegende Blechrand die Form einer Wellenlinie 18 hat. Auch eine Wellenlinie 18 soll im Sinne der vorliegenden Erfindung als Blechrand mit Aussparungen betrachtet werden.

Eine typische Einbausituation eines erfindungsgemäßen Wabenkörpers 1 ist in Fig. 5 dargestellt. Von einem Verbrennungsmotor 20 gelangen Abgase in ein Abgassystem 21, welches den erfindungsgemäßen Wabenkörper 1 und gegebenenfalls weitere Bauteile aufweist, insbesondere einen nachgeschalteten Oxidationskatalysator 22.

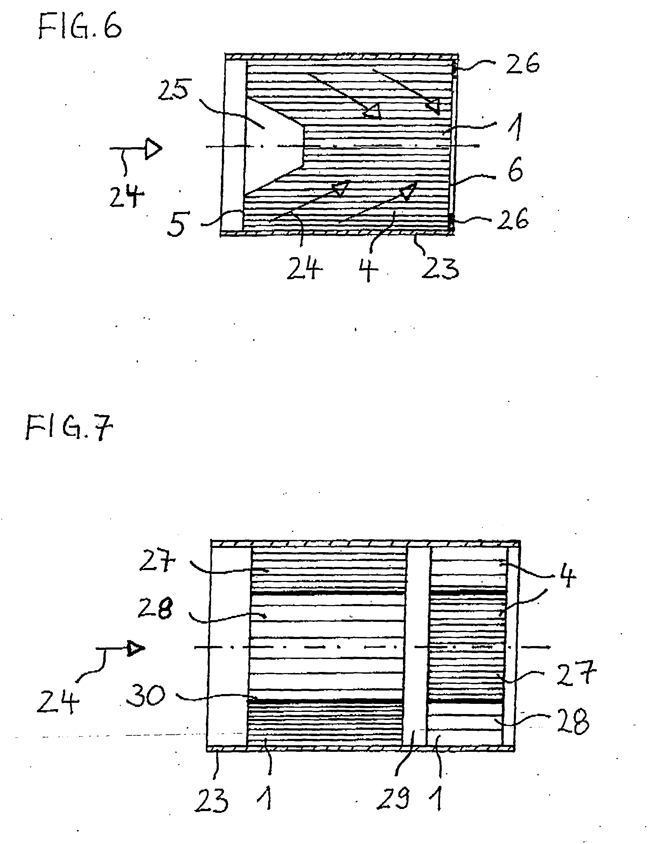

Fig. 6 zeigt einen, in einem Gehäuse 23 platzierten, Wabenkörper 1, der an der Eintrittsstirnseite 5 einen zentral angeordneten Hohlraum 25 aufweist. Dieser Hohlraum 25 hat einen sich konusförmig verjüngenden Abschnitt. Die aufgrund des Hohlraumes 25 unterschiedlich lang ausgeführten Kanäle 4 bewirken Druckdifferenzen, so dass das mit der veranschaulichten Strömungsrichtung 24 ankommende Abgas im Inneren des Wabenkörpers abgelenkt wird, wie das durch die Pfeile schematisch dargestellt ist. Zur Verstärkung dieses Effekts ist zudem ein Teil der Kanäle 4 nahe der Austrittsstirnseite 6 mittels einer ringförmig ausgebildeten Blockade 26 verschlossen.

In der Fig. 7 sind zwei Wabenkörper 1 in einem Gehäuse 23 dargestellt, die jeweils zwei konzentrische Teilvolumen 27, 28 aufweisen, die eine voneinander verschiedene Anzahl von Kanälen 4 pro Einheitsquerschnittsfläche aufweisen. Dabei sind die Wabenkörper 1 mit einem Spalt 29 z.B. kleiner 10 mm voneinander beabstandet und weisen eine inverse Anordnung der Teilvolumen 27, 28 auf, so dass die Teilvolumen 27 mit einer hohen Kanaldichte des ersten Wabenkörpers mit den Teilvolumen 28 mit niedrigerer Kanaldichte des zweiten Wabenkörpers gegenüber liegen (in Strömungsrichtung 24 gesehen). Bevorzugt ist dabei die dargestellte Variante, bei der der erste Wabenkörper außen ein erstes Teilvolumen 27 mit hoher Kanaldichte aufweist. Insbesondere weist das erste Teilvolumen 27 eine Kanaldichte auf, die mindestens um den Faktor 1,5 größer ist als die des zweiten Teilvolumens 28. Bevorzugt hat das erste Teilvolumen eine Kanaldichte im Bereich von mindestens 800 cpsi (cells per square inch; 1 cpsi entspricht etwa 6,4516 Zellen pro Quadratzentimeter).

Weiterhin ist im Hinblick auf die beachtlichen thermischen und dynamischen Belastungen des Wabenkörpers 1 im Abgassystem eines Fahrzeuges vorteilhaft, dass zumindest teilweise zwischen den Teilvolumen 27, 28 wenigstens ein Stützelement 30 vorgesehen ist. Bei der hier dargestellten konzentrischen Anordnung kann dieses Stützelement 30 zum Beispiel ein Rohrabschnitt sein.

Die vorliegende Erfindung dient zur weiteren Verbesserung von metallischen Wabenkörpern beim Einsatz als Abgasreinigungskomponenten, insbesondere zur Beseitigung von Schadstoffpartikeln aus einem Abgas. Die Erfindung verhindert bzw. verringert die Ablagerung von Partikeln, insbesondere Ruß, an den Stirnseiten eines Wabenkörpers.

### Bezugszeichenliste

- 1: Wabenkörper
- 2: strukturiertes Blech
- 3: im wesentlichen glattes Blech
- 4: Kanal
- 5: Eintrittsstirnseite
- 6: Austrittsstirnseite
- 7: Stirnseitiger Blechrand des strukturierten Bleches
- 8: stirnseitiger Blechrand des im wesentlichen glatten Bleches
- 9: Aussparung im gewellten Blech
- 10: Aussparung im glatten Blech
- 11: Verbindungsstelle
- 12: Berandungslinie
- 13: Öffnung
- 14: Umlenkungsstruktur
- 15: Randstreifen
- 16: Metallfaser
- 17: Rußpartikel
- 18: Wellenlinie
- 19: Strömungswege
- 20: Verbrennungsmotor
- 21: Abgasreinigungsanlage
- 22: Katalysator
- 23: Gehäuse
- 24: Strömungsrichtung
- 25: Hohlraum
- 26: Blockade
- 27: erstes Teilvolumen
- 28: zweites Teilvolumen
- 29: Spalt
- 30: Stützelement

- L: Länge
- B: Breite

## Patentansprüche

1. Aus Blechen (2, 3) gewickelter oder geschlungener Wabenkörper (1) mit einer Vielzahl von zumindest teilweise strukturierten Blechlagen (2), deren Strukturierung Kanäle (4) bildet, die von einer Eintrittsstirnseite (5) zu einer Austrittsstirnseite (6) des Wabenkörpers (1) führen, **dadurch gekennzeichnet, dass** zumindest ein Teil der Blechlagen (2, 3) an der Eintrittsstirnseite (5) und/oder der Austrittsstirnseite (6) an ihren Rändern (7, 8) Aussparungen (9, 10) aufweist, so dass sich eine zerklüftete Struktur der Eintrittsstirnseite (5) bzw. Austrittsstirnseite (6) ergibt.

2. Wabenkörper (1) nach Anspruch 1, der aus abwechselnden Lagen im Wesentlichen glatter (2) und gewellter (3) Bleche aufgebaut ist, **dadurch gekennzeichnet, dass** nur die glatten Bleche (2) Aussparungen aufweisen.

3. Wabenkörper (1) nach Anspruch 1, der aus abwechselnden Lagen im Wesentlichen glatter (2) und gewellter (3) Bleche aufgebaut ist, **dadurch gekennzeichnet, dass** nur die gewellten Bleche (3) Aussparungen aufweisen.

4. Wabenkörper nach Anspruch 1, 2 oder 3, **dadurch gekennzeichnet, dass** mindestens ein Teil der Bleche (2, 3) aus porösem Material besteht, insbesondere aus verdichteten Metallfasern (16).

5. Wabenkörper nach einem der vorhergehenden Ansprüche, **dadurch gekennzeichnet, dass** die Bleche (2, 3) an ihren stirnseitigen Rändern (7, 8) Abschnitte ohne Aussparungen (9, 10) aufweisen, die lang genug und häufig genug sind, dass statistisch verteilt eine Vielzahl von Kontaktstellen (11) zwischen den vordersten bzw. hintersten Rändern (7, 8) der Blechlagen (2, 3) vorhanden sind.

6. Wabenkörper (1) nach einem der vorhergehenden Ansprüche, **dadurch gekennzeichnet, dass** der Wabenkörper (1) aus einem oder mehreren Stapeln von Blechen (2, 3) gebildet ist, wobei die Bleche (2, 3) jedes Stapels eine Länge (L) und eine Breite (B) aufweisen, wobei L > B ist, und die Bleche (2, 3) jedes Stapels jeweils viele Aussparungen (9, 10) über die Länge (L) aufweisen.

7. Wabenkörper (1) nach einem der vorhergehenden Ansprüche, **dadurch gekennzeichnet, dass** die Aussparungen (9, 10) gerundete Berandungslinien (12) aufweisen.

8. Wabenkörper nach einem der vorhergehenden Ansprüche, **dadurch gekennzeichnet, dass** die Aussparungen (9, 10) die Form von Kreisabschnitten haben, vorzugsweise Halbkreise oder kleinere Kreisabschnitte.

9. Wabenkörper (1) nach einem der vorhergehenden Ansprüche, **dadurch gekennzeichnet, dass** mehr als 80 % der Kanäle (4) an mindestens einer Stirnseite (5, 6) im Bereich mindestens einer Aussparung (9, 10) enden, vorzugsweise mehr als 90 % der Kanäle (4).

10. Wabenkörper (1) nach einem der vorhergehenden Ansprüche, **dadurch gekennzeichnet, dass** er Teil einer Abgasreinigungsanlage (21) eines Verbrennungsmotors (20), insbesondere eines Dieselmotors, ist und zum Entfernen von Rußpartikeln (17) aus dem Abgas des Verbrennungsmotors (20) beiträgt.

11. Wabenkörper (1) nach einem der vorhergehenden Ansprüche, **dadurch gekennzeichnet, dass** er zusätzliche Öffnungen (13) in den Blechen (2, 3) und/oder Umlenkungsstrukturen (14) in den Kanälen (4) aufweist.

12. Wabenkörper (1) nach einem der vorhergehenden Ansprüche, **dadurch gekennzeichnet, dass** dieser an der Eintrittsstirnseite (5) wenigstens einen Hohlraum (25) aufweist.

13. Wabenkörper (1) nach einem der vorhergehenden Ansprüche, **dadurch gekennzeichnet, dass** ein Teil der Kanäle (4) nahe der Austrittsstirnseite (6) verschlossen ist.

14. Wabenkörper (1) nach einem der vorhergehenden Ansprüche, **dadurch gekennzeichnet, dass** dieser mehrere Teilvolumen (27, 28) aufweist, die eine voneinander verschiedene Anzahl von Kanälen (4) pro Einheitsquerschnittsfläche aufweisen.
